# EUROPÄISCHE PATENTANMELDUNG

(11) **EP 4 442 111 A1**
(43) Veröffentlichungstag der Anmeldung: **09.10.2024**
(21) Anmeldenummer: 24161510.3
(22) Anmeldetag: 05.03.2024
(51) Int. Cl.: A01F 29/06, A01F 29/09

(54) **HÄCKSELTROMMEL FÜR EINEN FELDHÄCKSLER**

(30) Priorität: 05.04.2023 DE 102023108775
(71) Anmelder: Maschinenfabrik Bernard Krone GmbH & Co. KG, 48480 Spelle (DE)
(72) Erfinder: Hülsmann, Michael, 49599 Voltlage/Weese (DE); Stabel, Peter, 54584 Gönnersdorf (DE)

(57) **Zusammenfassung**

Die Erfindung betrifft eine Häckseltrommel für einen Feldhäcksler, die zu einem Umlauf in eine Umlaufrichtung um eine Drehachse ausgebildet ist. Die Häckseltrommel umfasst zumindest eine Fixiereinrichtung, ein erstes Trägerelement, an dem ein erstes Schneidelement mit einer Schneide zum Schneiden von Erntegut angeordnet ist und das an der Fixiereinrichtung befestigt ist, und ein zweites Trägerelement, an dem ein zum ersten Schneidelement in die Umlaufrichtung benachbartes, zweites Schneidelement mit einer Schneide zum Schneiden von Erntegut angeordnet ist und das in die Umlaufrichtung von dem ersten Trägerelement beabstandet an der Fixiereinrichtung befestigt ist. Erfindungsgemäß greift das erste Trägerelement in einem zur Drehachse rechtwinkligen Querschnitt mit einem ersten Eingreifabschnitt ein in eine erste Eingreifausnehmung der Fixiereinrichtung.

## Beschreibung

Die Erfindung betrifft eine Häckseltrommel für einen Feldhäcksler. Die Häckseltrommel ist zu einem Umlauf in eine Umlaufrichtung um eine Drehachse ausgebildet. Die Häckseltrommel weist zumindest eine Fixiereinrichtung auf. Außerdem weist die Häckseltrommel zumindest ein erstes Trägerelement auf. An dem ersten Trägerelement ist ein erstes Schneidelement mit einer Schneide zum Schneiden von Erntegut angeordnet. Das erste Trägerelement ist an der Fixiereinrichtung befestigt. Die Häckseltrommel weist ein zweites Trägerelement auf. An dem zweiten Trägerelement ist ein zweites Schneidelement einer Schneide zum Schneiden von Erntegut angeordnet. Das zweite Schneidelement ist zum ersten Schneidelement in die Umlaufrichtung benachbart angeordnet. Das zweite Trägerelement ist an der Fixiereinrichtung befestigt. Das zweite Trägerelement ist außerdem in die Umlaufrichtung von dem ersten Trägerelement beabstandet angeordnet.

Die Häckseltrommel dient grundsätzlich zu einer Zerkleinerung von Erntegut. Hierzu rotiert die Häckseltrommel im Betrieb um die Drehachse, während Erntegut auf sie zubewegt wird. Die Schneidelemente schneiden pro Umlauf einen Teil des zugeführten Erntegutes. Die Beabstandung der Trägerelemente voneinander ist von zentraler Bedeutung, um jedes Schneidelement optimal positionieren zu können und eine Überlastung der Befestigung der Trägerelemente durch Kräfte auszuschließen, die von einem benachbarten Trägerelement eingetragen werden.

Eine vorbeschriebene Häckseltrommel ist aus der DE 697 46 657 T2, der DE 88 13 953 U1 und der DE 195 22 056 C2 bekannt. Hier sind die Trägerelemente auf ebene oder nach außen gewölbte, von der Drehachse abgewandte Oberflächen der Fixiereinrichtung aufgesetzt und mittels eines Befestigungsmittels befestigt. Das Befestigungsmittel presst die Trägerelemente an die Fixiereinrichtung. Nachteilig sind die bekannten Häckseltrommeln, da die von den Trägerelementen in die Umlaufrichtung auf die Fixiereinrichtung zu übertragenen Kräfte, die einzig durch die Pressung erreicht werden, relativ gering sind und die Befestigungsmittel bei Erntegutdurchsätzen, die größere zu übertragene Kräfte erforderten, nachgeben. Dabei geben die Befestigungsmittel insofern nach, als sie sich längen und einen unbeabsichtigt großen Abstand zwischen der Schneide und der Drehachse zulassen, der in einer Kollision der Schneide münden kann.

Aufgabe der vorliegenden Erfindung ist eine Verbesserung der Befestigung der Trägerelemente, um größere Erntegutdurchsätze erreichen zu können.

Erfindungsgemäß bildet die Fixiereinrichtung in einem zur Drehachse rechtwinkligen Querschnitt eine erste Eingreifausnehmung aus. Das erste Trägerelement weist einen ersten Eingreifabschnitt aus. Der erste Eingreifabschnitt greift in die Eingreifausnehmung ein. Durch diese geometrische Ausbildung der Fixiereinrichtung und des ersten Trägerelementes wird die von dem ersten Trägerelement auf die Fixiereinrichtung zu übertragene Kraft vergrößert. Die geometrische Ausbildung erlaubt eine größere Kontaktfläche zwischen dem ersten Trägerelement und der Fixiereinrichtung, entlang derer eine Pressung der Elemente aufeinander wirken kann. Durch das Eingreifen ist außerdem zumindest ein halber Formschluss, insbesondere in die Umlaufrichtung wirkend, zu erreichen, durch den die im Betrieb entstehenden Kräfte selbst unabhängig von oder zusätzlich zu der erzeugten Pressung zu übertragen sind. Insgesamt lassen sich somit größere Erntegutdurchsätze erreichen, ohne die Befestigungen der Trägerelemente zu gefährden.

Die Fixiereinrichtung ist insbesondere ein in Bezug auf die Drehachse zentraler Teil der Häckseltrommel. Die Fixiereinrichtung ist ein oder mehrteilig ausgebildet. Im Falle einer Mehrteiligkeit der Fixiereinrichtung sind die Teile bevorzugt unbeweglich zueinander und besonders bevorzugt zumindest teilweise miteinander verschweißt. Vorzugsweise ist zumindest ein Teil die Fixiereinrichtung als Gussteil ausgebildet.

Die Fixiereinrichtung weist bevorzugt eine Hohlwelle und/oder eine Vollwelle auf, deren/dessen Längsachse der Drehachse entspricht. Bei der Drehachse handelt es sich um eine geometrische Achse, nicht um eine gegenständliche Achse. Die Fixiereinrichtung erstreckt sich im Querschnitt insbesondere in die Umlaufrichtung an den Trägerelementen entlang. Im Querschnitt ist die Fixiereinrichtung bevorzugt bogen- oder ringförmig um die Drehachse ausgebildet. Alternativ dazu ist die Fixiereinrichtung bevorzugt scheibenförmig ausgebildet.

Falls die Fixiereinrichtung die Hohlwelle aufweist, liegen die Trägerelemente in einer ersten vorteilhaften Variante unmittelbar an der Hohlwelle an. In einer zweiten vorteilhaften Variante liegen die Trägerelemente an einem Fixierelement oder unterschiedlichen Fixierelementen an, das/die wiederum an der Hohlwelle angeordnet ist/sind. Das zumindest eine Fixierelement erstreckt sich insbesondere derart in die Umlaufrichtung, dass seine Haupterstreckungsrichtung die Umlaufrichtung ist. Besonders bevorzugt ist das Fixierelement ringförmig ausgebildet. Das Fixierelement liegt entlang seiner gesamten Erstreckung in die Umlaufrichtung vorzugsweise lückenlos an der Hohlwelle an. Besonders bevorzugt weist die Fixiereinrichtung eine Mehrzahl von in eine zur Drehachse parallele axiale Richtung voneinander beabstandeten Fixierelementen auf, an denen insbesondere das erste Trägerelement jeweils anliegt.

Das erste Trägerelement ist bevorzugt einstückig ausgebildet. Insbesondere sind etwaige Befestigungsmittel wie Schrauben oder Nieten nicht als Teil des ersten Trägerelementes anzusehen. Besonders bevorzugt handelt es sich bei dem ersten Trägerelement um ein gezogenes oder gewalztes Metallprofil. Vorzugsweise erstreckt sich das erste Trägerelement länglich parallel zur Schneide des ersten Schneidelementes. Die längliche Erstreckung ist so zu verstehen, dass die Haupterstreckungsrichtung des Trägerelementes mit der Erstreckungsrichtung der Schneide zusammenfällt. Insbesondere hat die Haupterstreckungsrichtung bezogen auf die Drehachse einen axialen und einen tangentialen Anteil. Die Länge des ersten Trägerelementes gleicht insbesondere zumindest im Wesentlichen der Länge des ersten Schneidelementes. Die Länge einer Kontaktfläche zwischen dem ersten Trägerelement und dem ersten Schneidelement entspricht bevorzugt der Länge des ersten Trägerelementes. Durch diese Ausbildung des ersten Trägerelementes wird eine umfangreiche Stützung des ersten Schneidelementes erreicht.

Bevorzugt ist jedes Schneidelement von genau einem Trägerelement getragen. Alternativ oder zusätzlich trägt jedes Trägerelement bevorzugt genau ein Schneidelement. Insbesondere bildet jedes Schneidelement mit dem das Schneidelement tragende Trägerelement eine Schneideinheit.

Die Position des zweiten Trägerelementes unterscheidet sich in der Position des ersten Trägerelementes vorzugsweise einzig durch eine Verschwenkung um die Drehachse. Das erste und das zweite Trägerelement sind daher in die Umlaufrichtung voneinander beabstandet. Zwischen dem ersten Trägerelement und dem zweiten Trägerelement ist zumindest bezogen auf die Umlaufrichtung insbesondere kein weiteres Trägerelement angeordnet.

Bei den Schneidelementen handelt es sich insbesondere um Messer. Das erste Schneidelement und das zweite Schneidelement sind insbesondere identisch ausgebildet. Die Schneidelemente sind bevorzugt mit dem jeweiligen Trägerelement verschraubt. Zwischen dem ersten Schneidelement und dem zweiten Schneidelement ist in Bezug auf die Umlaufrichtung vorzugsweise kein weiteres Schneidelement angeordnet. Die Querschnittsfläche der Schneidelemente erstreckt sich bevorzugt zumindest abschnittsweise anteilig tangential und anteilig radial länglich und mündet in ihrer jeweiligen Schneide.

Die Schneiden wirken im Betrieb insbesondere mit einer zur Drehachse unbeweglich angeordneten Gegenschneide zusammen. Das Erntegut wird insbesondere nach Art eines Scherenschnittes zwischen einer der Schneiden und der Gegenschneide geschnitten. Die Schneiden definieren den Außendurchmesser der Häckseltrommel. Im Betrieb hat jeder Punkt der Schneide einen konstanten Abstand zur Drehachse. Insbesondere liegt jeder Punkt der Schneide in einer auf die Drehachse bezogenen, gedachten Zylindermantelfläche oder Kegelmantelfläche. Die Schneide ist bevorzugt zur axialen Richtung angewinkelt, d.h. nicht parallel, und/oder spiralförmig um die Drehachse ausgebildet.

Das erste Schneidelement und das zweite Schneidelement gehören zu einem ersten Satz von Schneidelementen, die in dem genannten Querschnitt geschnitten werden. Der erste Satz von Schneidelementen weist bevorzugt insgesamt bis zu 18 Schneidelemente auf. Zusätzlich zum ersten Satz der Schneidelemente weist die Häckseltrommel bevorzugt einen zweiten Satz von Schneidelementen auf, der zum ersten Satz in die axiale Richtung versetzt angeordnet ist. Grundsätzlich sind die beiden Sätze von Schneidelementen gleichartig ausgebildet. Der zweite Satz ist in Relation zum ersten Satz besonders bevorzugt an einer zur Drehachse rechtwinkligen Spiegelebene gespiegelt und um die Drehachse verschwenkt angeordnet.

Die erste Eingreifausnehmung ist bevorzugt im Querschnitt nach außen, das heißt zumindest anteilig von der Drehachse abgewandt, (bei isolierter Betrachtung der Fixiereinrichtung) zur Umgebung hin offen. Besonders bevorzugt handelt es sich bei der ersten Eingreifausnehmung im Querschnitt um eine Vertiefung in der Außenkontur der Fixiereinrichtung. Mit der ersten Eingreifausnehmung ist vorzugsweise ein Raum definiert, in den der erste Eingreifabschnitt derart eingreift, dass eine Gerade, insbesondere eine auf die Drehachse bezogene Tangente, im Querschnitt den ersten Eingreifabschnitt und beidseitig davon je einen Teil der Fixiereinrichtung schneidet. Der erste Eingreifabschnitt hat insbesondere zu einem der beiden Teile oder beiden Teilen nur unmittelbar Kontakt. Das Vorstehende gilt ausdrücklich abgesehen von etwaigen Befestigungsmitteln. Alternativ zur Ausbildung des Eingreifens gemäß dem Anspruch 1 ist auch eine umgekehrte Anordnung möglich, bei der das erste Trägerelement die erste Eingreifausnehmung ausbildet, in die die Fixiereinrichtung mit dem ersten Eingreifabschnitt eingreift.

Die erfindungsgemäße Häckseltrommel ist insbesondere Teil eines Feldhäckslers und dient hierin zur Zerkleinerung von Erntegut. Ferner weist der Feldhäcksler eine Aufnahmeeinrichtung zur Aufnahme von Pflanzen als Erntegut und eine Auswurfeinrichtung zum Auswurf des zerkleinerten Ernteguts auf.

Bevorzugt greift der erste Eingreifabschnitt derart in die erste Eingreifausnehmung ein, dass der erste Eingreifabschnitt an einem in die Umlaufrichtung vorlaufenden Teil der Fixiereinrichtung anliegt und an einem in die Umlaufrichtung nachlaufenden Teil der Fixiereinrichtung anliegt. Es gibt also zumindest einen Punkt, mit dem der Eingreifabschnitt am Rand der Eingreifausnehmung anliegt und durch den eine anteilig mit der Umlaufrichtung zusammenfallende Tangente verläuft, die zuerst den Eingreifabschnitt und anschließend die Fixiereinrichtung schneidet. Es gibt zumindest einen weiteren Punkt, in dem der Eingreifabschnitt am Rand der Eingreifausnehmung anliegt und durch den eine anteilige in die Umlaufrichtung verlaufende Tangente verläuft, die zuerst die Fixiereinrichtung und anschließend den Eingreifabschnitt schneidet. Die genannten Teile der Fixiereinrichtung sind als lokal vor- oder nachlaufend zu verstehen. Dabei muss der Eingreifabschnitt in der Eingreifausnehmung nicht lückenlos am Rand der Eingreifausnehmung anliegen, sondern kann auch nur punktuell an den beiden Teilen der Fixiereinrichtung anliegen. Durch diese Ausbildung ist das erste Trägerelement formschlüssig sowohl in die Umlaufrichtung als auch gegen die Umlaufrichtung gesichert und so zur Aufnahme hoher Kräfte in diese Richtungen geeignet.

Besonders bevorzugt bildet die Fixiereinrichtung ein Hauptlager aus, an dem das erste Trägerelement von außen anliegt. Insbesondere bildet die Fixiereinrichtung ein Gegenlager aus, dass von außen am ersten Trägerelement anliegt. Die Lager sind dabei als Teile der Fixiereinrichtung zu verstehen, zu denen das Trägerelement bevorzugt unmittelbar Kontakt hat. Optional kann es aufgrund von Toleranzen zu einem Spalt von bis zu 0,2 mm zwischen dem Gegenlager und dem ersten Trägerelement kommen. "Von außen" anliegend bedeutet, dass eine Radiale durch das erste Trägerelement und das jeweilige Lager das erste Trägerelement zwischen dem Gegenlager der Drehachse und das Hauptlager zwischen dem ersten Trägerelement und der Drehachse schneidet. Das von außen anliegende Element ist zumindest lokal weiter von der Drehachse beabstandet als das jeweils andere Element. Insbesondere liegt das erste Trägerelement mit dem Eingreifabschnitt am Hauptlager und/oder am Gegenlager an. Das Hauptlager und das Gegenlager sind insbesondere im selben Querschnitt sichtbar. Das erste Trägerelement ist insbesondere mit dem Hauptlager oder gegen das Hauptlager verschraubt. Durch die Ausbildung mit den von innen und außen am ersten Trägerelement anliegenden Lagern ist eine weiter verbesserte Festlegung des ersten Trägerelementes an der Fixiereinrichtung erreicht. Das Gegenlager erübrigt oder unterstützt insbesondere eine Schraube zur Festlegung des ersten Trägerelementes an der Fixiereinrichtung.

Vorzugsweise ist das Gegenlager als in die Umlaufrichtung vorlaufender Teil der Fixiereinrichtung ausgebildet. Das Hauptlager ist insbesondere als in die Umlaufrichtung nachlaufender Teil der Fixiereinrichtung ausgebildet. Das erste Trägerelement liegt bevorzugt im Querschnitt mit einem zumindest anteilig in die Umlaufrichtung weisenden Ende am Gegenlager an. Die Kontaktfläche zwischen dem Gegenlager und dem ersten Trägerelement verläuft im Querschnitt besonders bevorzugt anteilig radial und anteilig in die Umlaufrichtung. Insbesondere hat zumindest ein Teil des Hauptlagers einen größeren Radius als zumindest ein Teil des Gegenlagers. Durch die vorbeschriebene Anordnung des Gegenlagers wirkt es insbesondere einer unbeabsichtigten Rotation des ersten Trägerelementes entgegen, die durch einen Aufprall des ersten Schneidelementes auf einem Hindernis ausgelöst werden könnte.

Das Hauptlager liegt insbesondere mit einer Trägerelementkontaktfläche an dem ersten Trägerelement an. Im Querschnitt ist die Trägerelementkontaktfläche bevorzugt derart zu einer die Trägerelementkontaktfläche schneidenden Radialen angewinkelt, dass die Trägerelementkontaktfläche sich von einem ersten Kontaktflächenende an insbesondere bis zu einem zweiten Kontaktflächenende in die Umlaufrichtung der Drehachse nähert. Die Trägerelementkontaktfläche ist insbesondere geradlinig ausgebildet, wobei von etwaigen Nuten abgesehen wird.

Das erste Trägerelement ist vorzugsweise lösbar an der Fixiereinrichtung befestigt. Insbesondere ist das erste Trägerelement an der Fixiereinrichtung mit zumindest einer Schraube verschraubt. Die Schraubendrehachse der Schraube ist insbesondere rechtwinklig zur Trägerelementkontaktfläche und/oder in einer zur Drehachse rechtwinkligen axialen Ebene angeordnet.

Vorzugsweise weist das erste Trägerelement im Querschnitt einen ersten Schenkel und einen zweiten Schenkel auf. An dem ersten Schenkel ist das erste Schneidelement angeordnet. Der zweite Schenkel bildet den ersten Eingreifabschnitt aus. Der erste Schenkel und der zweite Schenkel erstrecken sich angewinkelt zueinander. Von einem Verbindungsbereich der Schenkel aus erstrecken sich beide Schenkel insbesondere zumindest anteilig in die Umlaufrichtung. Besonders bevorzugt erstrecken sich die beiden Schenkel um ca. 90° zueinander angewinkelt. Der erste Schenkel ist insbesondere von der Fixiereinrichtung beabstandet. Über die beiden genannten Schenkel hinausgehende Teile umfasst das erste Trägerelement bevorzugt nicht. Vorzugsweise weisen beide Schenkel Bohrungen für Schrauben auf. Durch die zueinander angewinkelte Ausbildung der Schenkel lassen sich die Köpfe der Schrauben, mit denen das erste Trägerelement an der Fixiereinrichtung befestigt wird, zwischen dem ersten Schneidelement und der Fixiereinrichtung anordnen. Daraus resultiert bei Beibehaltung der verbesserten Stabilität ein geringerer Bauraumbedarf des ersten Trägerelementes, wodurch eine größere Zahl von Schneidelementen über den Umfang der Häckseltrommel verteilt werden kann.

Vorzugsweise ist das Hauptlager im Querschnitt an einer ersten Seite des zweiten Schenkels angeordnet und das Gegenlager an einer der ersten Seite gegenüberliegenden Seite des zweiten Schenkels angeordnet. Die Seiten haben im Querschnitt insbesondere Konturen, die bevorzugt geradlinig und zumindest im Wesentlichen parallel zueinander verlaufen. Der Schraubenkopf liegt insbesondere neben dem Gegenlager an der zweiten Seite an.

Der erste Schenkel liegt vorzugsweise derart von außen am ersten Schneidelement an, dass eine auf die Drehachse bezogene Radiale im Querschnitt das erste Schneidelement zwischen dem ersten Schenkel und der Drehachse schneidet. Von der Schneide aus erstreckt sich das Schneidelement also in einen Raum zwischen dem ersten Schenkel und der Fixiereinrichtung. Dies ist insbesondere der Raum, der für die Einführung der Schraube durch den zweiten Schenkel und in die Fixiereinrichtung benötigt wird, bevor das Schneidelement montiert wird. Durch diese Ausbildung lassen sich die vorbeschriebenen Vorteile besonders einfach erreichen. Außerdem ergibt sich zwischen dem ersten Schneidelement und der Drehachse ein größerer Raum, in dem das Erntegut allmählich umgelenkt werden kann. Daraus resultiert eine größere Laufruhe der Häckseltrommel.

Bevorzugt hat die erste Eingreifausnehmung im Querschnitt bei einem ersten Radius eine erste Erstreckung in die Umlaufrichtung und bei einem zweiten Radius, der kleiner ist als der erste Radius, eine zweite Erstreckung in die Umlaufrichtung, die größer ist als die erste Erstreckung. Das bedeutet, dass die erste Eingreifausnehmung im Querschnitt mit wachsenden Abstand von der Drehachse zumindest abschnittsweise schmaler wird. Das gilt insbesondere gleichermaßen für den ersten Eingriffabschnitt innerhalb der ersten Eingreifausnehmung. Es existiert somit eine Art Hinterschneidung, die bevorzugt eine Trennung des ersten Trägerelementes von der Fixiereinrichtung allein durch eine translatorische Relativbewegung, insbesondere radial, verhindert. Hierdurch ist die Position des ersten Trägerelementes weiter gesichert.

Vorzugsweise weist die Fixiereinrichtung eine sich angewinkelt zur Querschnittsebene länglich erstreckende Nut auf, in der ein Vorsprung des ersten Trägerelementes angeordnet ist. Die Nut erstreckt sich, insbesondere parallel zur Haupterstreckungsrichtung des ersten Trägerelementes und/oder der Schneide, länglich. Die Nut ist bevorzugt in oder neben dem Hauptlager ausgebildet. Die Nut hat insbesondere einen größeren Abstand von der Drehachse als ein (breiterer) Teil der Eingreifausnehmung. Im Querschnitt hat die Nut bevorzugt eine rundliche Kontur, die allmählich in die die Nut umgebenden Oberflächen der Fixiereinrichtung übergeht. Die Nut bildet den Formschluss fort und erleichtert bei der Montage der Häckseltrommel außerdem die Positionierung des ersten Trägerelementes auf der Fixiereinrichtung.

Im Querschnitt ist die Nut besonders bevorzugt versetzt zu der Schraube angeordnet, die sich durch das erste Trägerelement in die Fixiereinrichtung erstreckt. Die Nut ist relativ zur Schraube insbesondere zur Drehachse hin versetzt. Hierdurch wird einer Gefährdung der Schraubverbindung durch die Nut vorgebeugt. Insbesondere wird vermieden, dass die Nut sich nicht im direkten Druckbereich des Schraubenkopfes erstreckt. Die Nut ist im Querschnitt insbesondere abgerundet, um Kerbwirkungen zu vermeiden und die Schraubverbindung zu schützen.

Das erste Schneidelement ist bevorzugt zwischen dem ersten Trägerelement, insbesondere dem ersten Schenkel und einem Gegenträgerelement angeordnet. Das Gegenträgerelement ist in einem Querschnitt, insbesondere in einem zum bisherigen Querschnitt versetzten Querschnitt, in Richtung der Schneide des ersten Schneidelementes spitz zulaufend. Das Gegenträgerelement hat eine bogenförmige Leitfläche zur Umlenkung geschnittenen Erntegutes um mehr als 90°, bevorzugt um mehr als 120°, besonders bevorzugt um mehr als 150°, optimaler Weise um ca. 180°.

Die Leitfläche ist dazu insbesondere C- oder U-Förmig ausgebildet. Die Leitfläche schließt sich im Querschnitt vorzugsweise fließend an eine Oberfläche des Schneidelementes an. Andererseits schließt sich die Leitfläche bevorzugt an einen ersten Schenkel eines in die Umlaufrichtung voranlaufenden Trägerelementes oder an ein in die Umlaufrichtung voranlaufendes Abdeckelement an. Dadurch lässt sich ein besonders guter Erntegutfluss sowie eine gute Erntegutabgabe nach seiner Zerkleinerung erreichen, bei der nur verhältnismäßig geringe Kräfte auftreten. Das Gegenträgerelement liegt bevorzugt flächig an der Oberfläche des Schneidelementes an und erstreckt sich wie auch das erste Trägerelement länglich parallel zur Schneide des ersten Schneidelementes. Das erste Schneidelement ist zwischen dem Gegenträgerelement und dem ersten Trägerelement bevorzugt verschraubt. Das Gegenträgerelement ist insbesondere einstückig ausgebildet.

Das Gegenträgerelement weist an seinen axialen Enden relativ zur Leitfläche insbesondere in die Umlaufrichtung vorstehende Begrenzungsabschnitte auf. Die Begrenzungsabschnitte stehen insbesondere in Richtung der Schneide des ersten Schneidelementes vor. Zwischen den Begrenzungsabschnitten stehen vorzugsweise zusätzlich Schraubenaufnahmeabschnitte relativ zur Leitfläche vor, in die Schrauben zur Verschraubung des ersten Schneidelementes eindringen. Die Begrenzungsabschnitte beeinflussen den Erntegutfluss weiter positiv.

Insbesondere falls größere Schnittlängen beabsichtigt sind, lässt sich die Häckseltrommel mit weniger Schneidelementen als maximal montiert werden können betreiben. Vorzugsweise bildet die Fixiereinrichtung eine in die Umlaufrichtung zur ersten Eingreifausnehmung versetzt angeordnete zweite Eingreifausnehmung aus, die der ersten Eingreifausnehmung gleicht. In die zweite Eingreifausnehmung greift ein von einem ersten Abdeckelement umfasster zweiter Eingreifabschnitt ein. Das erste Abdeckelement hat bezogen auf die Drehachse eine geringere radiale Erstreckung als das erste Trägerelement. Das erste Abdeckelement dient bei größeren beabsichtigten Schnittlängen zum Ersatz eines weiteren Trägerelementes. Durch die geringere radiale Erstreckung beeinflusst das erste Abdeckelement den Erntegutfluss positiv und reduziert den Verschleiß der Häckseltrommel. Außerdem wird die Fixiereinrichtung vor dem Erntegut geschützt. Der zweite Eingreifabschnitt gleicht dabei bevorzugt dem ersten Eingreifabschnitt. Die zweite Eingreifausnehmung ist im Querschnitt bevorzugt benachbart zur ersten Eingreifausnehmung angeordnet.

Besonders bevorzugt ist an dem ersten Abdeckelement ein Abdeckzusatzelement angeordnet, dass eine von der Drehachse abgewandte Leitfläche aufweist. Das Abdeckzusatzelement erstreckt sich von dem ersten Abdeckelement zu einem weiteren Abdeckelement oder einem weiteren Trägerelement, das einen dritten Eingreifabschnitt ausbildet, der in eine dritte Eingreifausnehmung der Fixiereinrichtung eingreift. Die dritte Eingreifausnehmung gleicht der ersten Eingreifausnehmung und ist in die Umlaufrichtung zur zweiten Eingreifausnehmung versetzt, insbesondere benachbart angeordnet. Die Leitfläche grenzt entweder an das weitere Abdeckelement oder das weitere Trägerelement an oder ist mittels eines Spaltes davon beabstandet. Im Falle des Angrenzens stützt das Abdeckzusatzelement das weitere Abdeckelement oder das weitere Trägerelement ab und unterstützt damit die Fixiereinrichtung. Ansonsten verbessert die Leitfläche den Erntegutstrom weiter. Das erste Abdeckelement und das zweite Abdeckelement gleichen sich bevorzugt. Das Abdeckzusatzelement kann auch einstückig mit dem Abdeckelement ausgebildet sein. Das Abdeckelement und/oder das Abdeckzusatzelement weisen/weist zumindest einen axial über das benachbarte Trägerelement hervorstehenden Mitnehmer auf, der auch in den seitlichen Bereichen den Erntegutfluss unterstützt.

Das erste Abdeckelement und/oder das weitere Abdeckelement weisen/weist im Querschnitt einen dem zweiten Schenkel des ersten Trägerelementes gleichenden und den zweiten oder dritten Eingreifabschnitt aufweisenden Abdeckschenkel auf. Zusätzlich weisen sie oder weist es insbesondere einen im Querschnitt gegenüber vom zweiten oder dritten Eingreifabschnitt angeordneten Vorsprungsabschnitt auf, der von dem Abdeckabschnitt zumindest anteilig in die Umlaufrichtung vorsteht und eine von der Drehachse abgewandte Vorsprungsoberfläche hat. Diese schließt sich bevorzugt an die Leitfläche des benachbarten oder entgegen der Umlaufrichtung versetzt angeordneten Gegenträgerelementes oder Abdeckzusatzelementes an. Der Vorsprungsabschnitt gleicht insbesondere einem verkürzten ersten Schenkel des ersten Trägerelementes. Durch den Vorsprungsabschnitt wird der Erntegutfluss auch über die einzelnen Träger- und Abdeckelemente hinaus unterstützt.

Die erfindungsgemäße Häckseltrommel ist vorzugsweise hergestellt durch ein Verfahren, bei dem das erste Trägerelement und insbesondere auch das Abdeckelement zur Befestigung an der Fixiereinrichtung um eine Schwenkachse geschwenkt wird, die parallel zur Haupterstreckungsrichtung des ersten Trägerelementes verläuft. Auf diese Weise ist insbesondere der Eingreifabschnitt in die Eingreifausnehmung einzuhebeln. Hierzu wird bevorzugt zunächst der Vorsprung so weit wie möglich in die Nut eingesetzt und anschließend das innere Ende des ersten Trägerelementes auf das Gegenlager zubewegt. Insbesondere lässt sich der Eingreifabschnitt so in die Hinterschneidung einfügen.

Die vorstehend und/oder nachfolgend mit Bezug auf das erste Trägerelement beschriebenen Merkmale sind bevorzugt auch mit Bezug auf das zweite Trägerelement oder sämtliche Trägerelemente zu verstehen. Die vorstehend und/oder nachfolgend mit Bezug auf die erste Eingreifausnehmung oder den ersten Eingreifabschnitt beschriebenen Merkmale sind bevorzugt auch mit Bezug auf die/das zweite/dritte Eingreifausnehmung oder den -abschnitt oder sämtliche Eingreifausnehmungen oder -abschnitte zu verstehen. Richtungs-, perspektiv- und achsenbezogene Angaben sind grundsätzlich als auf die Drehachse bezogen zu verstehen.

Weitere Einzelheiten und Vorteile der Erfindung sind den nachfolgend schematisch dargestellten Figuren zu entnehmen. Es zeigen:
- Fig. 1: eine Fixiereinrichtung einer ersten erfindungsgemäßen Häckseltrommel in einer perspektivischen Darstellung,
- Fig. 2: die Fixiereinrichtung aus Fig. 1 in einer Radialansicht,
- Fig. 3: die Fixiereinrichtung aus Fig. 1 in einer Axialansicht,
- Fig. 4: die Fixiereinrichtung aus Fig. 1 in einem Längsschnitt,
- Fig. 5: ein Rohling der Fixiereinrichtung aus Fig. 1 vor einer spanenden Bearbeitung,
- Fig. 6: eine Fixiereinrichtung einer zweiten erfindungsgemäßen Häckseltrommel in einer perspektivischen Darstellung,
- Fig. 7: eine vereinfachte Querschnittsdarstellung der zweiten Häckseltrommel bei Ausblendung der Fixierelemente,
- Fig. 8: die zweite Häckseltrommel in einer perspektivischen Darstellung,
- Fig. 9: die zweite Häckseltrommel in einer entlang der Schnittlinie B - B in Fig. 8 geschnittenen Darstellung,
- Fig. 10: einen in der Fig. 9 gekennzeichneten Teil A in einer Detaildarstellung,
- Fig. 11: die zweite Häckseltrommel in einer Radialansicht,
- Fig. 12: die zweite Häckseltrommel in einer entlang der Schnittlinie C - C in Fig. 8 geschnittenen Darstellung,
- Fig. 13: einen in der Fig. 12 gekennzeichneten Teil D in einer Detaildarstellung,
- Fig. 14: die zweite Häckseltrommel in einer entlang der Schnittlinie F - F in Fig. 11 geschnittenen Darstellung,
- Fig. 15: einen in der Fig. 14 gekennzeichneten Teil E in einer Detaildarstellung,
- Fig. 16: eine Fig. 15 entsprechende Detaildarstellung einer dritten erfindungsgemäßen Häckseltrommel,
- Fig. 17: eine Fig. 15 entsprechende Detaildarstellung einer vierten erfindungsgemäßen Häckseltrommel,
- Fig. 18: die zweite Häckseltrommel während ihrer Montage nach einem ersten Montageschritt,
- Fig. 19: die zweite Häckseltrommel während ihrer Montage nach einem zweiten Montageschritt,
- Fig. 20: die zweite Häckseltrommel während ihrer Montage nach einem dritten Montageschritt,
- Fig. 21: die zweite Häckseltrommel während ihrer Montage nach einem vierten Montageschritt,
- Fig. 22: die zweite Häckseltrommel während ihrer Montage nach einem fünften Montageschritt,
- Fig. 23a bis 23f: ein Gegenträgerelement der zweiten Häckseltrommel in unterschiedlichen Ansichten,
- Fig. 24a bis 24e: ein Trägerelement der zweiten Häckseltrommel in unterschiedlichen Ansichten.

Gleiche oder ähnlich wirkende Teile sind, sofern sachdienlich, mit identischen Bezugsziffern versehen. Die einzelnen technischen Merkmale der nachfolgend beschriebenen Ausführungsformen der Erfindung können auch anders als beschrieben kombiniert zu erfindungsgemäßen Weiterbildungen führen.

Die Figuren zeigen unterschiedliche Varianten einer Häckseltrommel 2 für einen nicht dargestellten Feldhäcksler. Die Häckseltrommel 2 ist jeweils zu einem Umlauf in eine Umlaufrichtung UR um eine Drehachse DA ausgebildet. Die Häckseltrommeln 2 umfassen eine Fixiereinrichtung 50. Die Fixiereinrichtung 50 umfasst eine Eingangswelle 4 und eine ortsfest dazu angeordnete Hohlwelle 6.

Die Fixiereinrichtung 50 der ersten erfindungsgemäßen Häckseltrommel 2 umfasst vier Fixierelemente 10, 12, 52. Die Fixierelemente 10, 12, 52 sind im Wesentlichen ringförmig ausgebildet und an einer Außenfläche 8 der Hohlwelle 6 angeordnet. Die Fixierelemente 10, 12, 52 erstreckten sich in die Umlaufrichtung UR um den gesamten Umfang der Hohlwelle 6. Die Fixierelemente 10, 12, 52 sind in eine axiale Richtung AR versetzt auf der Hohlwelle 6 angeordnet, wobei die axiale Richtung AR bezogen auf die Drehachse DA zu verstehen ist. Ein zweites Fixierelement 12 ist zwischen einem ersten Fixierelement 10 und weiteren Fixierelementen 52 angeordnet.

Die zweite erfindungsgemäße Häckseltrommel 2 weist gegenüber der ersten erfindungsgemäßen Häckseltrommel 2 zwei weitere Fixierelemente 14, 52 auf, die wie das zweite Fixierelement 12 ausgebildet sind und benachbart zu den äußeren Fixierelementen 10, 52 auf der Hohlwelle 6 angeordnet sind. Mit der Ausnahme der äußeren Fixierelemente 10, 52 sind die Fixierelemente 14, 12, 52 geometrische identisch ausgebildet und lediglich derart verschieden zueinander positioniert, dass sie in die axiale Richtung AR zueinander versetzt und geringfügig um die Drehachse DA zueinander verschwenkt befestigt sind.

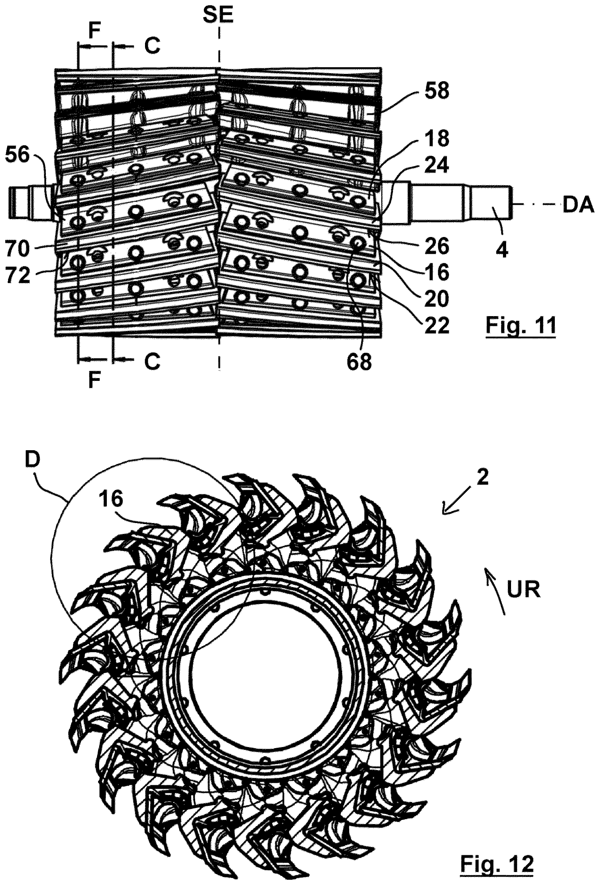

Die Häckseltrommeln 2 weisen jeweils zwei gleichartig ausgebildete Sätze von Trägerelementen 16, 18, 19, 56 und Schneidelemente 20, 24, 27, 70 auf. Die Trägerelemente 16, 18, 19, 56 und die Schneidelemente 20, 24, 27, 70 sind einander 1:1 zugeordnet und bilden gemeinsam Schneideinheiten. Einem ersten der Sätze gehört ein erstes Trägerelement 16, ein zweites Trägerelement 18 und ein drittes Trägerelement 19 sowie ein erstes Schneidelement 20, ein zweites Schneidelement 24 und ein drittes Schneidelement 27 an. Die Schneidelemente 20, 24, 27 weisen jeweils eine Schneide 22, 26, 29 auf, die sich in der Radialansicht über das erste und das zweite Fixierelement 10, 12 und insbesondere das dritte Fixierelement 14 hinwegerstreckt. Einem zweiten der Sätze gehört u.a. ein weiteres Trägerelement 56 und ein weiteres Schneidelement 70 mit einer Schneide 72 an, die sich in der Radialansicht über die weiteren Fixierelemente 52 hinwegerstreckt. Die Sätze grenzen im Bereich einer Spiegelebene SE in der axialen Richtung AR aneinander an, ohne sich zu berühren (Fig. 11). Jeder Satz umfasst bei der ersten und der zweiten erfindungsgemäßen Häckseltrommel 2 18 Trägerelemente 16, 18, 19, 56 und Schneidelemente 20, 24, 27. Bei der dritten erfindungsgemäßen Häckseltrommel 2 umfasst jeder Satz neun Trägerelemente 16, 18, 19, 56. Bei der vierten erfindungsgemäßen Häckseltrommel 2 umfasst jeder Satz sechs Trägerelemente 16, 18, 19, 56. Die nachfolgenden Ausführungen sind exemplarisch auf den ersten Satz bezogen.

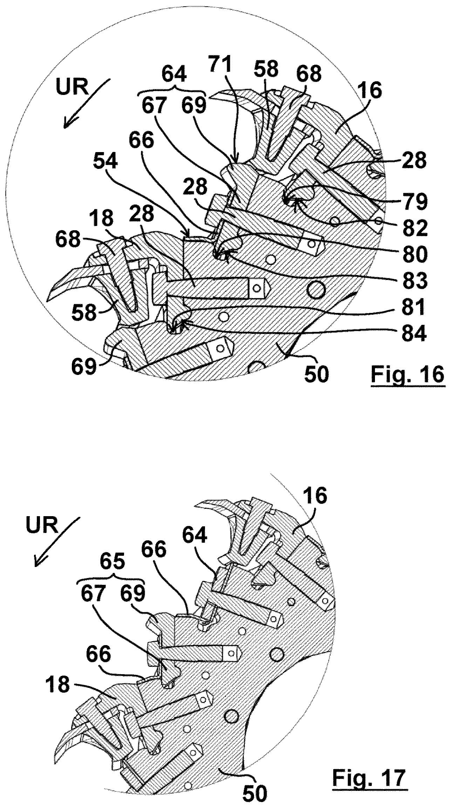

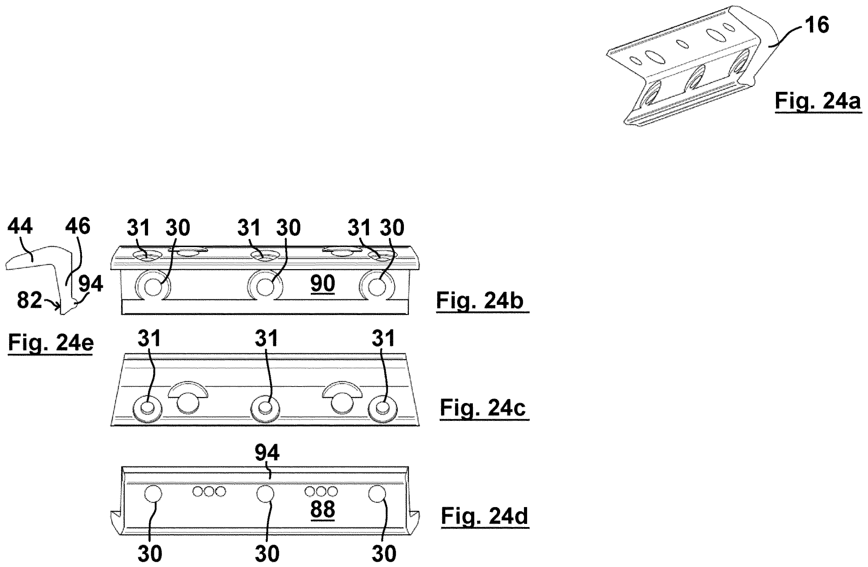

Jede der Häckseltrommeln 2 umfasst ein erstes Trägerelement 16, ein zweites Trägerelement 18 und ein drittes Trägerelement 19, die in die Umlaufrichtung UR benachbart zueinander angeordnet sind. Die Trägerelemente 16, 18, 19 sind mit dem ersten Fixierelement 10, dem zweiten Fixierelement 12 und insbesondere dem dritten Fixierelement 14 jeweils mittels einer Schraube 28 lösbar verschraubt (Fig. 16). Für jede Schraube 28 weisen die Trägerelemente 16, 18, 19 eine Bohrung 30 auf. Die Trägerelemente 16, 18, 19 weisen weitere Bohrungen 31 für Schrauben 68 zur Festlegung der Schneidelemente 20, 24, 27 an den Trägerelementen 16, 18, 19 auf (Fig. 24a ff.).

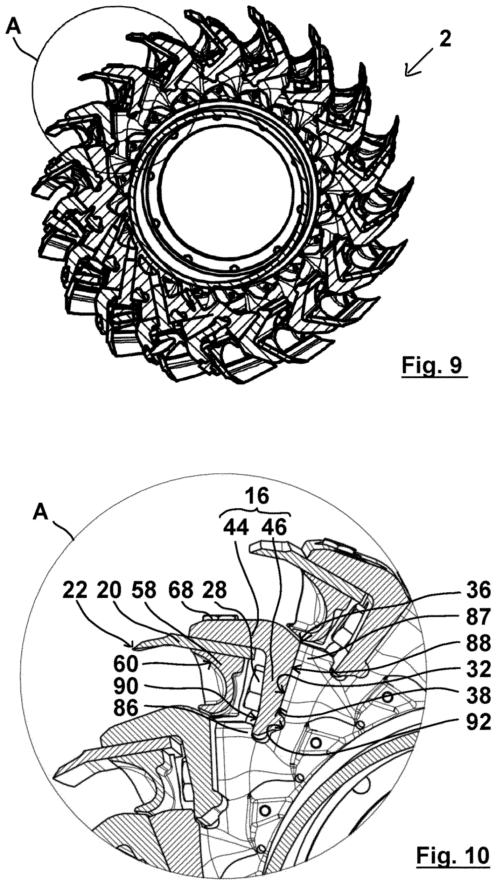

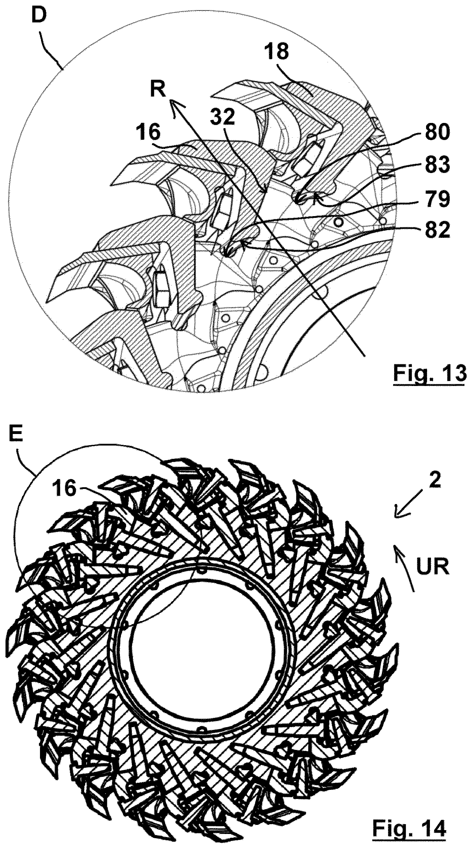

Die Fixierelemente 10, 12, 14 weisen pro Trägerelement 16, 18, 19 jeweils eine Trägerelementkontaktfläche 32, 33, 34 auf, an der das jeweilige Trägerelement 16, 18, 19 anliegt. Die Trägerelementkontaktflächen 32, 33, 34 für das erste Trägerelement 16 sind in die Umlaufrichtung UR versetzt zueinander angeordnet. Dadurch erstrecken sich die Trägerelemente 16, 18 19 und die Schneidelemente 20, 24, 27 länglich angewinkelt zur axialen Richtung AR, ohne einen entlang ihrer Länge variierenden Querschnitt haben zu müssen. Die Trägerelementkontaktflächen 32, 33, 34 sind in einem zur Drehachse DA rechtwinkligen Querschnitt zu einer sich schneidenden Radialen R angewinkelt ausgebildet (Fig. 13). Konkret nähern sich die Trägerelementkontaktflächen 32, 33, 34 von einem ersten Kontaktflächenende 36 bis zu einem zweiten Kontaktflächenende 38 zumindest ungeachtet einer Nut 92 der Drehachse DA, wobei das zweite Kontaktflächenende 38 in die Umlaufrichtung UR zum ersten Kontaktflächenende 36 versetzt angeordnet ist (Fig. 10).

Die Trägerelemente 16, 18, 19 weisen jeweils einen Eingreifabschnitt 82, 83, 84 auf, mit dem sie in Eingreifausnehmungen 79, 80, 81 der Fixiereinrichtung 50 eingreifen. Dasselbe gilt für Abdeckelemente 64, 65, durch die bei der dritten und vierten Häckseltrommel 2 eine Hälfte bzw. zwei Drittel der Trägerelemente16, 18, 19 ersetzt sind (Fig. 16 u. 17). Die Fixiereinrichtung 50 bildet ein Hauptlager 87 und ein Gegenlager 86 aus. Die Trägerelemente 16, 18, 19 weisen im Querschnitt (Fig. 10) einen ersten Schenkel 44, an dem das jeweilige Schneidelement 20, 24, 27 angeordnet ist, und einen zweiten Schenkel 46 auf, der den jeweiligen Eingreifabschnitt 82, 83, 84 ausbildet. Der zweite Schenkel 46 ist zum ersten Schenkel 44 im Querschnitt angewinkelt. Das Hauptlager 87 liegt an einer ersten Seite 88 des zweiten Schenkels 46 an. Das Gegenlager 86 liegt an einer zweiten Seite 90 des zweiten Schenkels 46 an (Fig. 10). Das Gegenlager 86 ist dabei mit Bezug auf das Trägerelement 16, 18, 19 in die Umlaufrichtung UR vorlaufend, das Hauptlager 87 ist in die Umlaufrichtung UR nachlaufend ausgebildet. Der erste Schenkel 44 liegt derart von außen an dem am Trägerelement 16, 18, 19 angeordneten Schneidelement 20, 24, 27 an, dass die Radiale R das Schneidelement 20, 24, 27 zwischen dem ersten Schenkel 44 und der Drehachse DA schneidet.

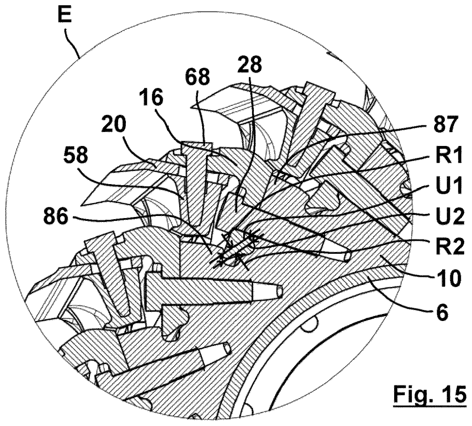

Die Eingreifausnehmungen 79, 80, 81 haben im Querschnitt bei einem ersten Radius R1 eine erste Erstreckung U1 in die Umlaufrichtung UR. Bei einem zweiten Radius R2, der kleiner ist als der erste Radius R1, haben die Eingreifausnehmungen 79, 80, 81 eine zweite Erstreckung U2 in die Umlaufrichtung UR, die größer ist als die erste Erstreckung U1 (Fig. 15). Die Trägerelemente 16, 18, 19 weisen einen im Querschnitt sichtbaren Vorsprung 94 auf, der sich länglich, parallel zur Schneide 22, 26, 29 des am Trägerelement 16, 18, 19 angeordneten Schneidelementes 20, 24, 27 erstreckt. Der Vorsprung 94 erstreckt sich in die Nuten 92 der Fixierelemente 10, 12, 14. Die Nut 92 ist versetzt zur Schraube 28 angeordnet.

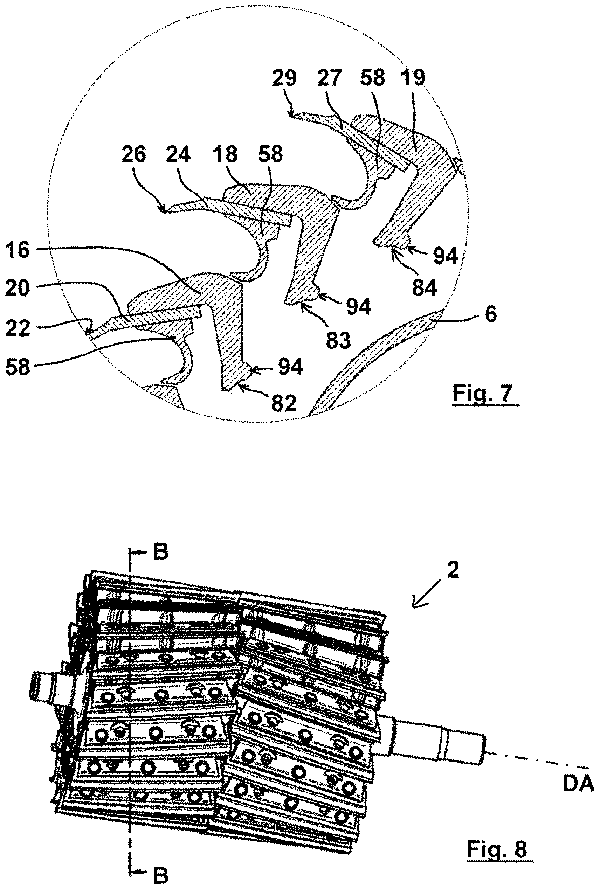

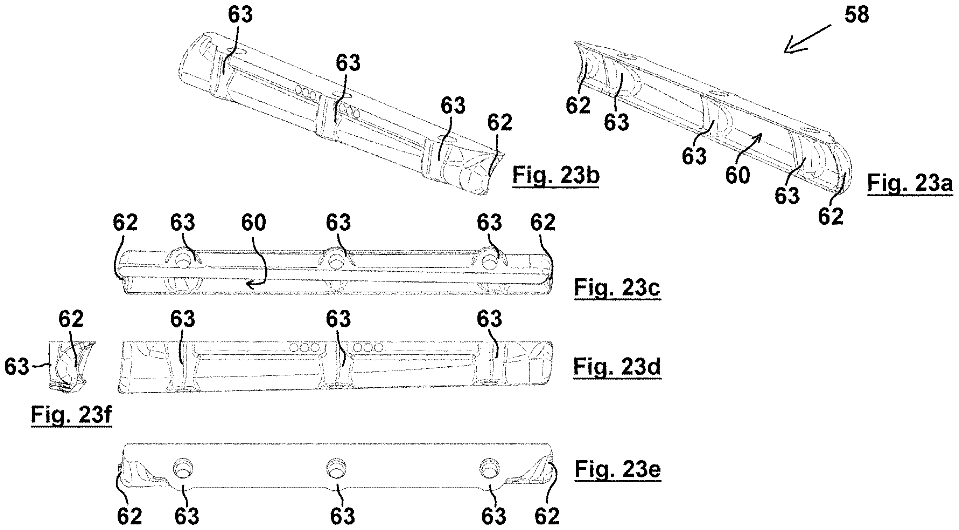

Die Schneidelemente 20, 24, 27 sind jeweils zwischen einem der Trägerelemente 16, 18, 19 und einem Gegenträgerelement 58 angeordnet (Fig. 7). Im Querschnitt läuft das Gegenträgerelement 58 in Richtung der Schneide 22, 26, 29 des Schneidelementes 20, 24, 27, an dem sie anliegen, spitz zu. Die Gegenträgerelemente 58 haben eine bogenförmige Leitfläche 60 zur Umlenkung geschnittenen Erntegutes um ca. 180°. Die Gegenträgerelemente 58 weisen einen an ihren axialen Enden relativ zur Leitfläche 60 vorstehenden Begrenzungsabschnitt 62 auf. Zwischen den Begrenzungsabschnitten 62 ist pro Fixierelement 10, 12, 14 ein Schraubenaufnahmeabschnitt 63 angeordnet (Fig. 23a ff.).

Die Abdeckelemente 64, 65 haben bezogen auf die Drehachse DA eine geringere radiale Erstreckung als die Trägerelemente 16, 18, 19. Auf den Abdeckelementen 64, 65 sind Abdeckzusatzelemente 66 angeordnet, die eine von der Drehachse DA abgewandte Leitfläche 54 aufweisen und sich von dem jeweiligen Abdeckelement 64, 65 zum in die Umlaufrichtung UR vorlaufenden Abdeckelement 65 oder Trägerelement 18 erstrecken. Zumindest ein Teil der Abdeckelemente 64, 65 weist im Querschnitt einen Abdeckschenkel 67 auf, der dem zweiten Schenkel 46 der Trägerelemente 16, 18, 19 gleicht. An den Abdeckschenkel 67 grenzt ein gegenüber vom zweiten oder dritten Eingreifabschnitt 83, 84 angeordneter Vorsprungsabschnitt 69 an. Der Vorsprungsabschnitt 69 steht von dem Abdeckschenkel 67 in die Umlaufrichtung UR hervor und hat eine von der Drehachse DA abgewandte Vorsprungsoberfläche 71. Die Vorsprungsoberfläche 71 schließt sich an die Leitfläche 54, 60 an.

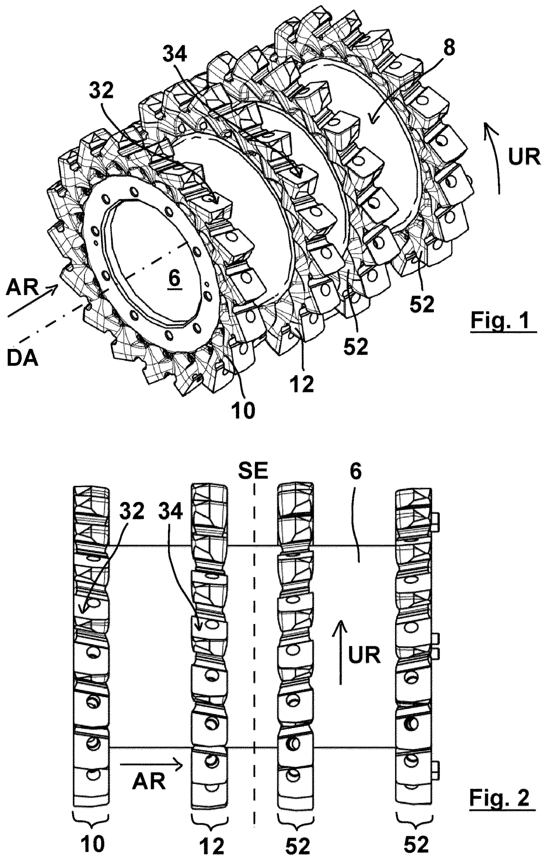

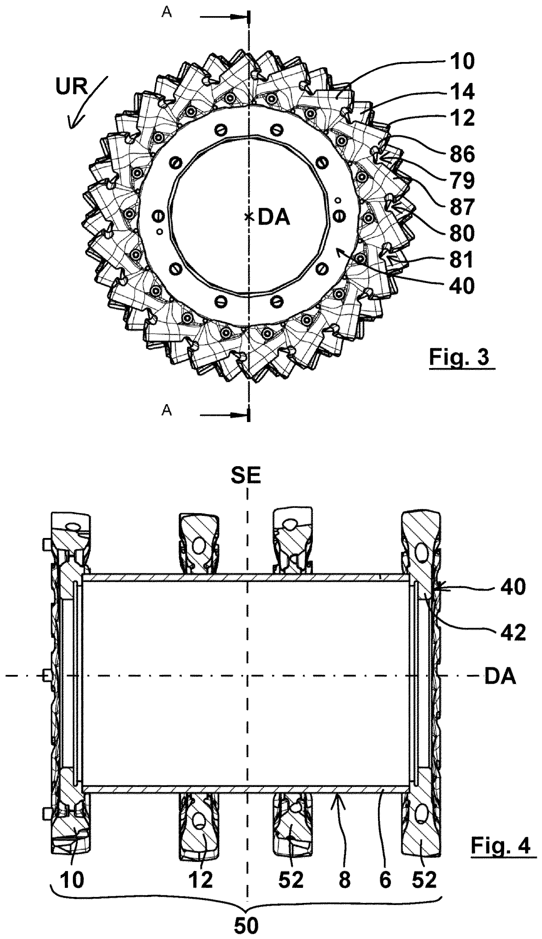

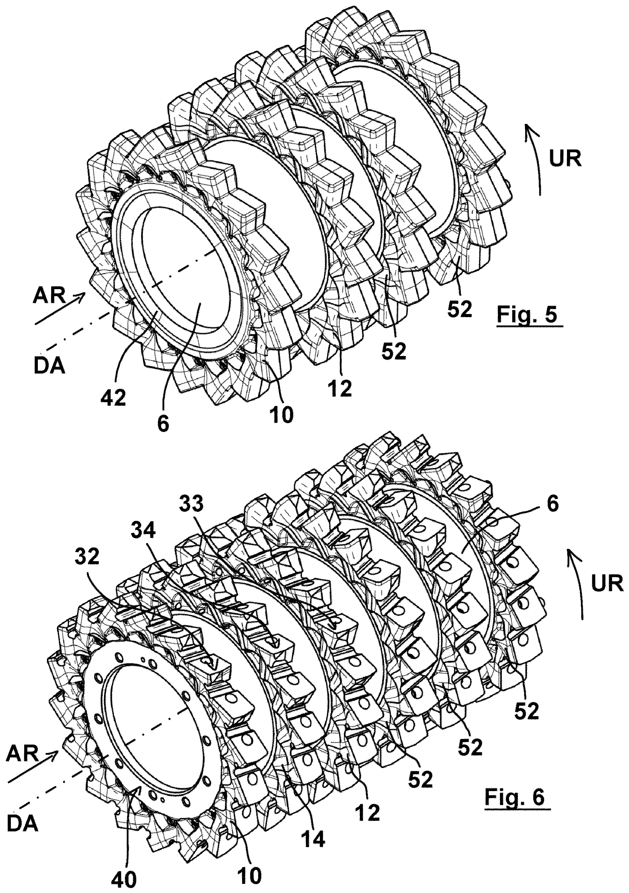

Die Häckseltrommeln 2 werden folgendermaßen hergestellt. Zunächst werden die Fixierelemente 10, 12, 14 an der Außenfläche 8 der Hohlwelle 6 angeschweißt (Fig. 5). Anschließend werden die Fixierelemente 10, 12, 14 spanend bearbeitet (Fig. 1 bis 4 und 6). Dadurch werden die Trägerelementkontaktflächen 32, 33, 34 hergestellt. Außerdem wird durch die spanende Bearbeitung an einem Drehmomentaufnahmeabschnitt 40 des ersten Fixierelementes 10 eine Eingangswellenkontaktfläche 42 hergestellt, an der anschließend die Eingangswelle 4 angelegt wird (Fig. 8 und 11). Der Drehmomentaufnahmeabschnitt 40 hat einen kleineren Innendurchmesser als die Hohlwelle 6 und ist in die axiale Richtung AR versetzt zur Hohlwelle 6 angeordnet. Durch die spanende Bearbeitung nach dem Verschweißen der Fixierelemente 10, 12, 14 haben zumindest abgesehen von den äußeren Fixierelementen 10, 52 die Fixierelemente 12, 14, 52 eine identische Rohform, wenn sie verschweißt werden (Fig. 5).

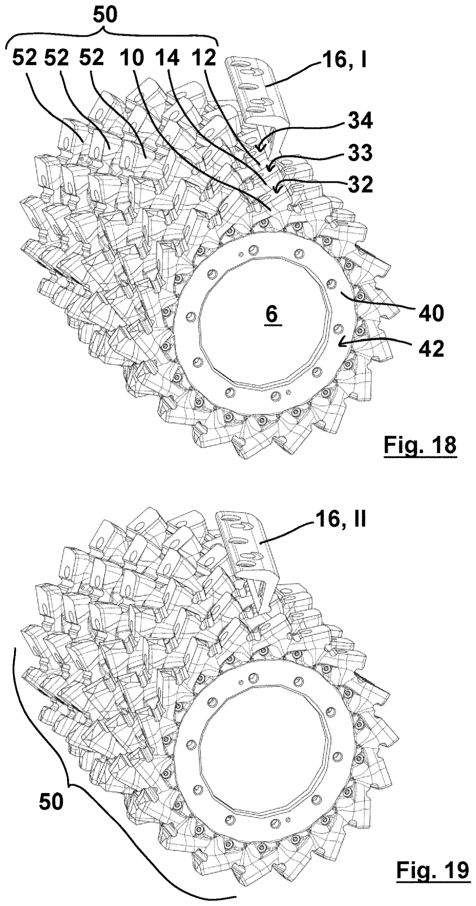

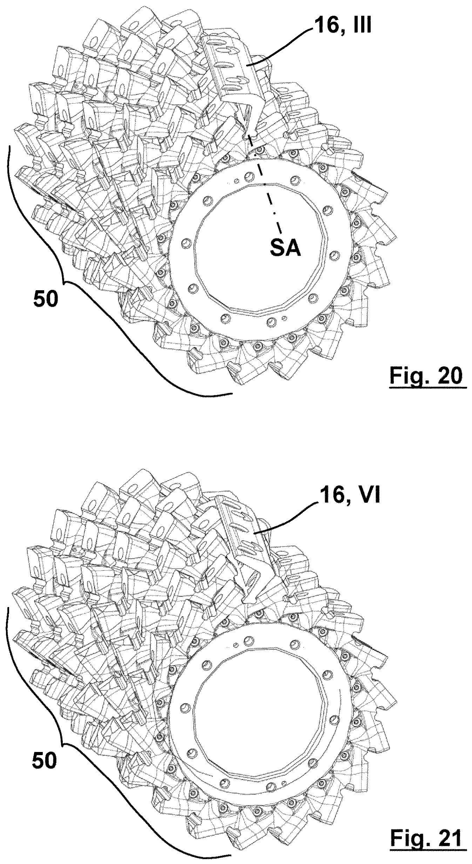

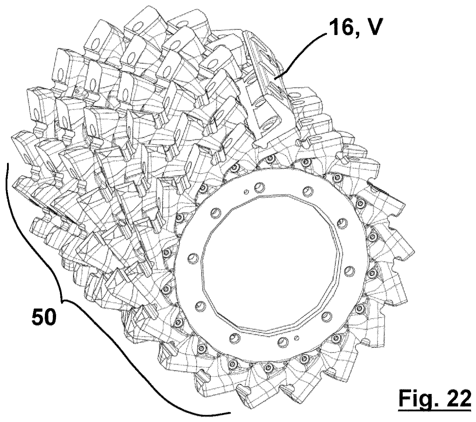

Die Trägerelemente 16, 18, 19 werden nach der spanenden Bearbeitung der Fixierelemente 10, 12, 14 daran angeordnet. Hierzu werden die Trägerelemente 16, 18, 19 mit ihren Eingreifabschnitten 82, 83, 84 in die Eingreifausnehmungen 79, 80, 81 eingehebelt. Dazu werden die Trägerelemente 16, 18, 19 gemäß fünf Schritten I bis V relativ zur Fixiereinrichtung 50 bewegt und an den Fixierelementen 10, 12, 14 anliegend um eine Schwenkachse SA geschwenkt (Fig. 18 - 22). Dabei greifen die Vorsprünge 94 in die Nuten 92 ein. Die Schwenkachse SA verläuft jeweils parallel zur Haupterstreckungsrichtung der Trägerelemente 16, 18, 19. Nach dem Einhebeln der Trägerelemente 16, 18, 19 werden diese an den Fixierelementen 10, 12, 14 befestigt, insbesondere verschraubt. Anschließend werden die Schneidelemente 20, 24, 27 mit den Trägerelementen 16, 18, 19 verschraubt.

Die Hohlwelle 6 und der Drehmomentaufnahmeabschnitt 40 weisen sich rund um die Drehachse DA erstreckende Innenseiten auf, die in den Figuren teilweise vereinfacht eckig gezeigt sind. Die Fixierelemente 10, 12, 14, 52 haben eine komplexe Geometrie, die insbesondere durch Linien geringerer Stärke angedeutet ist. Die Linien geringerer Stärke sind nicht notwendigerweise als Bauteilkonturen zu verstehen.

## Patentansprüche

1. Häckseltrommel (2) für einen Feldhäcksler, die zu einem Umlauf in eine Umlaufrichtung (UR) um eine Drehachse (DA) ausgebildet ist und zumindest eine Fixiereinrichtung (50), ein erstes Trägerelement (16), an dem ein erstes Schneidelement (20) mit einer Schneide (22) zum Schneiden von Erntegut angeordnet ist und das an der Fixiereinrichtung (50) befestigt ist, und ein zweites Trägerelement (18) aufweist, an dem ein zum ersten Schneidelement (20) in die Umlaufrichtung (UR) benachbartes, zweites Schneidelement (24) mit einer Schneide (26) zum Schneiden von Erntegut angeordnet ist und das in die Umlaufrichtung (UR) von dem ersten Trägerelement (16) beabstandet an der Fixiereinrichtung (50) befestigt ist, **dadurch gekennzeichnet, dass** die Fixiereinrichtung (50) in einem zur Drehachse (DA) rechtwinkligen Querschnitt eine erste Eingreifausnehmung (79) ausbildet, in die das erste Trägerelement (16) mit einem ersten Eingreifabschnitt (82) eingreift.

2. Häckseltrommel nach Anspruch 1, **dadurch gekennzeichnet, dass** der erste Eingreifabschnitt (82) derart in die erste Eingreifausnehmung (79) eingreift, dass der erste Eingreifabschnitt (82) an einem in die Umlaufrichtung (UR) vorlaufenden Teil der Fixiereinrichtung (50) anliegt und an einem in die Umlaufrichtung (UR) nachlaufenden Teil der Fixiereinrichtung (50) anliegt.

3. Häckseltrommel nach einem der vorhergehenden Ansprüche, **dadurch gekennzeichnet, dass** die Fixiereinrichtung (50) ein Hauptlager (87) ausbildet, an dem das erste Trägerelement (16) von außen anliegt, und ein Gegenlager (86) ausbildet, das von außen am ersten Trägerelement (16) anliegt.

4. Häckseltrommel nach einem der vorhergehenden Ansprüche, **dadurch gekennzeichnet, dass** das Gegenlager (86) als in die Umlaufrichtung (UR) vorlaufender Teil der Fixiereinrichtung (50) ausgebildet ist.

5. Häckseltrommel nach einem der vorhergehenden Ansprüche, **dadurch gekennzeichnet, dass** das erste Trägerelement (16) lösbar an der Fixiereinrichtung (50) befestigt ist.

6. Häckseltrommel nach einem der vorhergehenden Ansprüche, **dadurch gekennzeichnet, dass** das erste Trägerelement (16) im Querschnitt einen ersten Schenkel (44), an dem das erste Schneidelement (20) angeordnet ist, und einen zweiten Schenkel (46) aufweist, der den ersten Eingreifabschnitt (82) ausbildet und sich angewinkelt zum ersten Schenkel (44) erstreckt.

7. Häckseltrommel nach einem der vorhergehenden Ansprüche, **dadurch gekennzeichnet, dass** im Querschnitt das Hauptlager (87) an einer ersten Seite (88) des zweiten Schenkels (46) angeordnet ist und das Gegenlager an einer der ersten Seite (88) gegenüberliegenden zweiten Seite (90) des zweiten Schenkels (46) angeordnet ist.

8. Häckseltrommel nach einem der vorhergehenden Ansprüche, **dadurch gekennzeichnet, dass** der erste Schenkel (44) derart von außen am ersten Schneidelement (20) anliegt, dass eine auf die Drehachse (DA) bezogene Radiale (R) im Querschnitt das erste Schneidelement (20) zwischen dem ersten Schenkel (44) und der Drehachse (DA) schneidet.

9. Häckseltrommel nach einem der vorhergehenden Ansprüche, **dadurch gekennzeichnet, dass** die erste Eingreifausnehmung (79) im Querschnitt bei einem ersten Radius (R1) eine erste Erstreckung (U1) in die Umlaufrichtung (UR) hat und bei einem zweiten Radius (R2), der kleiner ist als der erste Radius (R1), eine zweite Erstreckung (U2) in die Umlaufrichtung (UR) hat, die größer ist als die erste Erstreckung (U1).

10. Häckseltrommel nach einem der vorhergehenden Ansprüche, **dadurch gekennzeichnet, dass** die Fixiereinrichtung (50) eine sich angewinkelt zur Querschnittsebene länglich erstreckende Nut (92) aufweist, in der ein Vorsprung (94) des ersten Trägerelementes (16) angeordnet ist.

11. Häckseltrommel nach einem der vorhergehenden Ansprüche, **dadurch gekennzeichnet, dass** die Nut (92) im Querschnitt versetzt zu einer Schraube (28) angeordnet ist, die sich durch das erste Trägerelement (16) und in die Fixiereinrichtung (50) erstreckt.

12. Häckseltrommel nach einem der vorhergehenden Ansprüche, **dadurch gekennzeichnet, dass** das erste Schneidelement (20) zwischen dem ersten Trägerelement (16) und einem Gegenträgerelement (58) angeordnet ist, das im Querschnitt in Richtung der Schneide (22) des ersten Schneidelementes (20) spitz zuläuft und eine bogenförmige Leitfläche (60) zur Umlenkung geschnittenen Erntegutes um mehr als 90°, bevorzugt um mehr als 120°, besonders bevorzugt um mehr als 150° hat.

13. Häckseltrommel nach einem der vorhergehenden Ansprüche, **dadurch gekennzeichnet, dass** das Gegenträgerelement (58) an seinen axialen Enden relativ zur Leitfläche (60) in die Umlaufrichtung UR vorstehende Begrenzungsabschnitte (62) aufweist.

14. Häckseltrommel nach einem der vorhergehenden Ansprüche, **gekennzeichnet, durch** eine in die Umlaufrichtung (UR) zur ersten Eingreifausnehmung (79) versetzt von der Fixiereinrichtung (50) ausgebildete zweite Eingreifausnehmung (80), die der ersten Eingreifausnehmung (79) gleicht und in die ein von einem ersten Abdeckelement (64) umfasster zweiter Eingreifabschnitt (83) eingreift, wobei das erste Abdeckelement (64) bezogen auf die Drehachse (DA) eine geringere radiale Erstreckung hat als das erste Trägerelement (16).

15. Häckseltrommel nach einem der vorhergehenden Ansprüche, **gekennzeichnet, durch** ein an dem ersten Abdeckelement (64) angeordnetes Abdeckzusatzelement (66), das eine von der Drehachse (DA) abgewandte Leitfläche (54) aufweist und sich von dem ersten Abdeckelement (64) zur einem weiteren Abdeckelement (65) oder einem weiteren Trägerelement (18) erstreckt, das einen dritten Eingreifabschnitt (84) ausbildet, der in eine dritte Eingreifausnehmung (81) der Fixiereinrichtung (50) eingreift, die der ersten Eingreifausnehmung (79) gleicht und in die Umlaufrichtung (UR) zur zweiten Eingreifausnehmung (80) versetzt angeordnet ist.

16. Häckseltrommel nach einem der vorhergehenden Ansprüche, **dadurch gekennzeichnet, dass** das erste Abdeckelement (64) und/oder das weitere Abdeckelement (65) im Querschnitt einen dem zweiten Schenkel (46) des ersten Trägerelementes (16) gleichenden und den zweiten oder dritten Eingreifabschnitt (83, 84) aufweisenden Abdeckschenkel (67) und einen im Querschnitt gegenüber vom zweiten oder dritten Eingreifabschnitt (83, 84) angeordneten Vorsprungsabschnitt (69) aufweist, der von dem Abdeckschenkel (67) zumindest anteilig in die Umlaufrichtung (UR) vorsteht und eine von der Drehachse (DA) abgewandte Vorsprungsoberfläche (71) hat, die sich an die Leitfläche (54, 60) des benachbarten und entgegen der Umlaufrichtung (UR) versetzt angeordneten Gegenträgerelementes (58) oder Abdeckzusatzelementes (66) anschließt.

17. Häckseltrommel nach einem der vorhergehenden Ansprüche, erhalten durch ein Verfahren, bei dem das erste Trägerelement (16) und insbesondere das erste Abdeckelement (64) zur Befestigung an der Fixiereinrichtung (50) um eine Schwenkachse (SA) geschwenkt wird, die parallel zur Haupterstreckungsrichtung des ersten Trägerelementes (16) verläuft.
